(19) Europäisches Patentamt
European Patent Office
Office européen des brevets

(11) **EP 3 922 348 A1**

(12) **EUROPÄISCHE PATENTANMELDUNG**

(43) Veröffentlichungstag:
**15.12.2021 Patentblatt 2021/50**

(51) Int Cl.:
***B01J 19/00*** *(2006.01)*

(21) Anmeldenummer: **20178862.7**

(22) Anmeldetag: **09.06.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **BASF SE**
**67056 Ludwigshafen am Rhein (DE)**

(72) Erfinder:
• **ZIEGLER, Andreas Norbert**
**67056 Ludwigshafen (DE)**

• **KLEINERT, Tobias**
**01986 Schwarzheide (DE)**
• **SCHREIBER, Michael**
**67056 Ludwigshafen (DE)**
• **ZAHN, Volker Michael**
**Wyandotte, TX 48192 (US)**
• **STEIN, Bernd**
**67056 Ludwigshafen (DE)**

(74) Vertreter: **BASF IP Association**
**BASF SE**
**GBI-C006**
**67056 Ludwigshafen (DE)**

(54) **VERFAHREN ZUR ÜBERWACHUNG EINES REAKTORS FÜR EINE MEHRPHASENREAKTION**

(57) Verfahren zur Überwachung eines Reaktors, in dem eine chemische Mehrphasenreaktion abläuft, bei der ein Gemisch mit mindestens einer Flüssigphase und darin ungelösten Gasblasen vorhanden ist, umfassend die Schritte
(a) Erfassung von Messwerten ausgewählter Zustandsgrößen, die für die Bestimmung von Gasvolumina relevant sind,
(b) Berechnung des Gesamtvolumens an ungelöstem Gas im Reaktor auf Basis der erfassten Messwerte,
(c) Vergleich des berechneten Gesamtvolumens an ungelöstem Gas mit einem vorgegebenen Grenzwert, und
(d) Einleiten von Sicherungsmaßnahmen, falls der vorgegebene Grenzwert überschritten wird.

EP 3 922 348 A1

## Beschreibung

Die Erfindung betrifft ein Verfahren zur Überwachung eines Reaktors, in dem eine chemische Mehrphasenreaktion abläuft, bei der ein Gemisch mit mindestens einer Flüssigphase und darin ungelösten Gasblasen vorhanden ist, wobei auf Basis von erfassten Messwerten ein Zustand des Reaktors berechnet wird und bei Überschreitung eines Grenzwertes für den Zustand Sicherungsmaßnahmen eingeleitet werden. Weiterhin betrifft die Erfindung eine Vorrichtung zur Durchführung des erfindungsgemäßen Verfahrens.

Bei etlichen Reaktionssystemen in der chemischen Industrie besteht die inhärente Gefahr, dass während des Prozessablaufs potenziell gefährliche Zustände auftreten, die im Hinblick auf die Sicherheit von Mensch und Umwelt vermieden werden müssen. Mögliche Quellen solcher Gefährdungspotenziale sind beispielsweise exotherme Reaktionen, bei denen große Wärmemengen entstehen können, oder Reaktionen, bei denen eine explosionsfähige Atmosphäre im Inneren der Apparaturen entsteht, insbesondere in Gasphasen. Um das Risiko einer Freisetzung von Chemikalien durch Explosionen oder andere mögliche Schäden an Reaktoren und sonstigen Apparaten zu minimieren, ist es in der Prozesstechnik üblich, die Durchführung von Reaktionen zu überwachen und gegebenenfalls Sicherungsmaßnahmen zu ergreifen. Neben der Überwachung von Grenzwerten für beispielsweise Druck und Temperatur haben sich auch Verfahren zur Absicherung von Reaktionssystemen etabliert, bei denen auf Basis von mathematischen Modellen Aussagen über sicherheitsrelevante Zustände gewonnen werden, die nicht direkt messbar sind.

Ein solches modellbasiertes Schutzkonzept offenbart das Dokument DE 102 25 383 A1. Dort ist ein Verfahren zur Überwachung von exothermen Reaktionen in einem Reaktor beschrieben, bei dem ausgehend von Druck- und Temperaturmessungen über eine Energiebilanz ein maximal auftretender Druckhub sowie ein Durchgehdruck berechnet werden.

Für die Reaktionsklasse der Emulsionspolymerisation wird in dem Dokument DE 199 05 712 A1 ein Verfahren zur Online-Überwachung des Monomerumsatzes bei der Emulsionspolymerisation beschrieben, bei dem über eine Wärmebilanzierung die maximal zu erwartende Innentemperatur im Reaktor berechnet wird. Bei Überschreitung eines Grenzwertes werden Maßnahmen eingeleitet, die ein weiteres Ansteigen der nicht abgeführten Wärmemenge verhindern.

Die bekannten Verfahren sind geeignet, potenzielle Gefahren aufgrund der Exothermie von Reaktionssystemen zu erkennen und gegebenenfalls Sicherungsmaßnahmen zu ergreifen. Sie sind allerdings ungeeignet, mögliche Gefahren zu erkennen, die sich aus der Akkumulation von explosionsfähigen Gasen in Reaktionsapparaten ergeben können. Insbesondere für Reaktionssysteme, bei denen sich kleine bis kleinste Mengen an Gas verteilt in flüssigen Systemen befinden, die unter bestimmten Prozessbedingungen zu einer großen zusammenhängenden Gasmenge akkumulieren können, sind bislang keine zufriedenstellenden Absicherungsverfahren bekannt.

Es stellte sich daher die Aufgabe, bekannte Absicherungsverfahren und Sicherheitskonzepte derart weiterzuentwickeln, dass Aussagen über Gefahren möglich werden, die in verteilten Gasphasen begründet sind.

Diese Aufgabe wird erfindungsgemäß gelöst durch ein Verfahren gemäß Anspruch 1. Weiterhin wird die Aufgabe gelöst durch eine Vorrichtung gemäß Anspruch 9. Vorteilhafte Ausgestaltungen des Verfahrens sind in den Ansprüchen 2 bis 8 angegeben. Anspruch 10 und Anspruch 11 beschreiben ein Computerprogramm sowie ein Computerprogrammprodukt, die geeignet sind, ein erfindungsgemäßes Verfahren durchzuführen.

Ein erster Gegenstand der Erfindung ist ein Verfahren zur Überwachung eines Reaktors, in dem eine chemische Mehrphasenreaktion abläuft, bei der ein Gemisch mit mindestens einer Flüssigphase und darin ungelösten Gasblasen vorhanden ist, umfassend die Schritte:

(a) Erfassung von Messwerten ausgewählter Zustandsgrößen, die für die Bestimmung von Gasvolumina relevant sind,
(b) Berechnung des Gesamtvolumens an ungelöstem Gas im Reaktor auf Basis der erfassten Messwerte,
(c) Vergleich des berechneten Gesamtvolumens an ungelöstem Gas mit einem vorgegebenen Grenzwert, und
(d) Einleiten von Sicherungsmaßnahmen, falls der vorgegebene Grenzwert überschritten wird.

Erfindungsgemäß wird unter dem Begriff "Reaktor" nicht nur der Behälter oder Apparat verstanden, in dem eine chemische Reaktion abläuft, sondern sämtliche hydraulisch gekoppelten Bauteile und/oder Apparateteile, die ein Gasvolumen aufweisen oder zum Gesamtvolumen an Gas beitragen können, beispielsweise Zuläufe, Abläufe, Umläufe, Pumpen, Ventile, Wärmetauscher oder Pufferbehälter.

Unter einer "chemischen Mehrphasenreaktion" wird eine chemische Reaktion verstanden, bei der mehrere Aggregatzustände (Gas, Flüssigkeit, Feststoff) und/oder mehrere Phasen eines Aggregatzustandes, beispielsweise eine ölreiche flüssige Phase und eine wasserreiche flüssige Phase, gleichzeitig im Reaktor vorhanden sind.

Bevorzugt handelt es sich bei der chemischen Mehrphasenreaktion um eine solche, bei der zerfallsfähige, reaktive oder giftige Gasphasen auftreten. Bei solchen Reaktionstypen ist die Überwachung und Absicherung des Reaktors von besonderer Bedeutung.

Weiterhin ist bevorzugt, dass die chemische Mehrphasenreaktion eine Vinylierung, Ethinylierung, Hydrocarboxylierung, Cyclisierung bzw. cyclisierende Polymerisation, Acetylierung, Alkoxylierung, Partialoxidation, Hydroformylierung oder Phosgenierung ist.

Erfindungsgemäß ist in dem Reaktor ein Gemisch mit mindestens einer Flüssigphase und darin ungelösten Gasblasen vorhanden. Zusätzlich können in dem Gemisch auch noch weitere flüssige Phasen, eine Gasphase oder Feststoffpartikel vorhanden sein.

Verfahrenstechnische Prozesse, auf die das erfindungsgemäße Überwachungsverfahren angewandt werden kann, lassen sich in der Regel durch Zustandsgrößen charakterisieren. Mit Hilfe dieser Zustandsgrößen lassen sich Aussagen über den Zustand des Prozesses zu einem beliebigen Zeitpunkt treffen. Manche der Zustandsgrößen lassen sich üblicherweise direkt im oder am Prozess messen, beispielsweise Volumen- oder Massenströme, Druck, Temperatur, Dichte, Viskosität oder auch Konzentrationen von einzelnen Komponenten eines Stoffgemisches oder einer Klasse von Substanzen. Andere Zustandsgrößen lassen sich nur mit hohem Aufwand oder gar nicht messen, beispielsweise die vollständige Zusammensetzung eines Stoffgemisches, Partikelgrößenverteilungen, Kettenlängenverteilungen, Melt Flow Index oder Kühlkapazitäten. Einige der nicht messbaren Zustandsgrößen lassen sich mit Hilfe von mathematischen Modellen aus anderen, messbaren oder nicht messbaren Zustandsgrößen ermitteln. Ein einfaches Beispiel hierfür ist ein Stoffsystem aus zwei Substanzen, deren Konzentrationen über Phasengleichgewichtsbeziehungen aus Messwerten für Druck und Temperatur eindeutig berechnet werden können.

Erfindungsgemäß werden Messwerte ausgewählter Zustandsgrößen erfasst, die für die Bestimmung von Gasvolumina relevant sind. Vorzugsweise sind die Zustandsgrößen ausgewählt aus der Gruppe der Dichten des ungelösten Gases im Reaktor, Dichten der Flüssigphase im Reaktor, Dichten von gegebenenfalls weiteren Komponenten wie Feststoffanteilen oder nicht löslichen Flüssigkeiten, Dichten des Gas-Flüssig-Gemisches im Reaktor, Drücke, Temperaturen, Massen, Massenströme und Volumenströme. Die Messwerte werden vorzugsweise an solchen Orten im Reaktor erfasst, die für die jeweilige Zustandsgröße repräsentativ sind.

Bei den Zustandsgrößen, Messwerten, Berechnungsvorschriften und Grenzwerten kann es sich auch um abgeleitete Größen handeln, beispielsweise einer Masse als Produkt von Volumen und Dichte, einer Massenkonzentration als Quotient aus Masse und Volumen, einer Volumenkonzentration als Quotient aus Volumen einer Komponente und dem Gesamtvolumen, Umrechnungen zu anderen Konzentrationen wie Stoffmengenkonzentration, Äquivalentkonzentration, Partikelkonzentration.

Die Erfassung der Zustandsgrößen kann sowohl auf aktuellen Messwerten basieren als auch auf Informationen über den bisherigen Verlauf der Messwerte, beispielsweise gemittelte oder gefilterte Messwerte. Die Verwendung von aktuellen Messwerten hat den Vorteil, dass nach einem Ausfall, einer Inkonsistenz oder anderen unvorhergesehenen Ereignissen das System sofort ohne Verzögerungen wieder korrekt den aktuellen Zustand berechnen kann. Ein weiterer Vorteil ist, dass keine Fehlerterme über mehrere Berechnungszyklen hinweg aufsummiert werden. In manchen Anwendungsfällen kann es aber auch von Vorteil sein, historische Messwerte, historische Berechnungsergebnisse oder Zwischenergebnisse, beispielsweise aus vorangegangenen Berechnungszyklen, in dem erfindungsgemäßen Verfahren zu berücksichtigen. Beispiele hierfür sind Optimierungen, Validierungen oder Korrekturen von Messwerten oder Berechnungsergebnissen unter Berücksichtigung von historischen Daten.

Je nach Anwendungsfall können manche Zustandsgrößen auch als Konstanten abgeschätzt werden, beispielsweise wenn sich über einen absehbaren Zeitraum Einflussgrößen wie Temperatur, Druck oder Zusammensetzung nicht oder nur gering ändern. Vorzugsweise werden bei einer Abschätzung die Zustandsgrößen konservativ abgeschätzt. Unter einer "konservativen Schätzung" wird das Ergebnis einer Berechnung verstanden, bei der Unsicherheiten in der Art einfließen, dass das Ergebnis hinsichtlich eines vorgegebenen Referenzwertes, insbesondere eines sicherheitsrelevanten Referenzwertes, den ungünstigsten Wert annimmt. Im Falle des Gesamtvolumens an ungelöstem Gas als berechnetes Ergebnis ist eine Abschätzung als konservativ anzusehen, wenn sie zu einer Erhöhung des berechneten Gesamtvolumens an ungelöstem Gas im Reaktor beiträgt, sodass die Berechnungen das größtmögliche Sicherheitsrisiko oder Schadenspotenzial berücksichtigen.

Auf Basis der erfassten Messwerte erfolgt die Berechnung des Gesamtvolumens an ungelöstem Gas im Reaktor. Das Gesamtvolumen kann aus mehreren unterschiedlichen Teilvolumina berechnet werden. Die Teilvolumina können sich auf unterschiedliche Bauteile und/oder Apparateteile des Reaktors beziehen, beispielsweise den Behälter oder Apparat, in dem eine chemische Reaktion abläuft, sowie auf mit diesem Behälter oder Apparat hydraulisch gekoppelte Zuläufe, Abläufe, Umläufe, Pumpen, Ventile, Wärmetauscher oder Pufferbehälter. Die Teilvolumina können sich auch auf unterschiedliche Formen von Volumina an ungelöstem Gas beziehen, beispielsweise akkumulierte Gasvolumina und akkumulierbare Gasvolumina. Unter "akkumulierten Gasvolumina" werden solche verstanden, die aufgrund ihrer Größe über das Stadium von Blasen hinausgehen und ein zusammenhängendes Gasvolumen bilden, beispielsweise in Totzonen von Apparaten oder Leitungen aufgrund deren Geometrie und den Strömungsverhältnissen. Unter "akkumulierbaren Gasvolumina" werden solche verstanden, die noch nicht akkumuliert sind, aber das Potenzial dazu besitzen, beispielsweise die Anwesenheit und Verteilung von Mikroblasen oder Makroblasen in dem Gas-Flüssig-Gemisch.

In einem weiteren Verfahrensschritt wird erfindungsgemäß das berechnete Gesamtvolumen an ungelöstem Gas mit einem vorgegebenen Grenzwert verglichen. Die Vorgabe des Grenzwertes erfolgt vorzugsweise auf Basis der Apparateauslegung und den Eigenschaften der in den Apparaten gehandhabten Substanzen. Beispielsweise kann sich der Grenzwert aus den Auslegungsgrenzen des Reaktors für Druck und Temperatur ergeben, wobei die bei einer potenziellen Deflagration oder Detonation des Stoffgemisches zu erwartenden Maximaldrücke und Maximaltemperaturen vorgegebene Grenzwerte nicht überschreiten dürfen. Der Grenzwert kann auch aus anderen Anforderungen an Prozessführung oder Apparatetechnik resultieren. Beispielsweise kann es in manchen Anwendungsfällen erforderlich sein, dass ein bestimmter Mindestfüllstand für Flüssigkeiten einzuhalten ist, um z.B. Druckdurchschläge durch Einbauten in Apparaten zu verhindern. Aus einem solchen Mindestfüllstand kann dann ein Grenzwert für das zulässige Gesamtvolumen an ungelöstem Gas im Reaktor resultieren.

Falls der vorgegebene Grenzwert überschritten wird, werden Sicherungsmaßnahmen eingeleitet, um Schäden am Reaktor oder seiner Umwelt zu verhindern.

Das erfindungsgemäße Verfahren ermöglicht die Kenntnis über das gesamte Gasvolumen an ungelöstem Gas über den gesamten Reaktor, sowohl in der Gasphase als auch in der Flüssigphase. Diese Kenntnis erlaubt Aussagen über das Gefahrenpotenzial, das in dem ungelösten, verteilten Gasvolumen begründet ist, und die präventive Einleitung von Sicherungsmaßnahmen zur Vermeidung des Gefahreneintritts.

Als Sicherungsmaßnahmen kommen unterschiedliche Maßnahmen in Frage, die abhängig sind von der konkreten Ausgestaltung des Reaktors und der darin durchgeführten chemischen Mehrphasenreaktion. Vorzugsweise umfassen die Sicherungsmaßnahmen eine oder mehrere der folgenden Maßnahmen:

- Drosseln der Zufuhr von Gas in den Reaktor,

- Ausschleusung von Gas aus dem Reaktor,

- Veränderung der Reaktionsbedingungen, sodass weniger Gas entsteht oder mehr Gas abreagiert,

- Erhöhung der Lösungsfähigkeit des Gases in der Flüssigphase.

In einer bevorzugten Ausführungsform des erfindungsgemäßen Verfahrens werden bei der Berechnung des Gesamtvolumens in Schritt (b) Unsicherheiten bezüglich der Messwerterfassung und der Berechnungsvorschriften in einer Weise berücksichtigt, dass das maximale Gesamtvolumen an ungelöstem Gas berechnet wird. Das "maximale Gesamtvolumen" kann auch als "oberer Grenzwert des Gesamtvolumens" bezeichnet werden.

Unsicherheiten bezüglich der Messwerterfassung können beispielsweise Toleranzen für Messfehler oder Messungenauigkeiten sein. Die Unsicherheiten werden in einer Weise berücksichtigt, dass der Maximalwert des Gesamtvolumens an ungelöstem Gas berechnet wird. Beispielsweise kann bei einer Druckmessung mit einer bekannten Messunsicherheit der aktuell ermittelte Messwert um die Messunsicherheit verringert werden, da ein niedrigerer Druck zu einem höheren Gasvolumen führt. Umgekehrt kann bei einer Temperaturmessung mit bekannter Messunsicherheit der aktuell ermittelte Messwert um die Messunsicherheit erhöht werden, da eine höhere Temperatur zu einem höheren Gasvolumen führt.

Unsicherheiten bezüglich der Berechnungsvorschriften können sich beispielsweise auf Basis unsicherer Parameter oder vereinfachender Modellannahmen ergeben. Zudem können durch die Berechnungsvorschriften Unsicherheiten aus der Messwerterfassung im Sinne einer Fehlerfortpflanzung in das berechnete Ergebnis eingehen. Auch diese Unsicherheiten werden in einer Weise berücksichtigt, dass der Maximalwert des Gesamtvolumens an ungelöstem Gas berechnet wird. Je nach Berechnungsvorschrift kann es vorteilhaft sein, Unsicherheiten in einer Komponente der Berechnungsvorschrift mit Unsicherheiten einer anderen Komponente im Sinne einer Kompensation zu berücksichtigen. Dadurch kann gegebenenfalls vermieden werden, dass die Berücksichtigung der Unsicherheiten zu konservativ ausfällt und ein unrealistisch großes Gesamtvolumen an ungelöstem Gas im Reaktor berechnet wird.

Durch eine Berücksichtigung von Unsicherheiten bezüglich der Messwerterfassung und der Berechnungsvorschriften kann sichergestellt werden, dass die realen Zustandsgrößen einen Sicherheitsabstand zu den vorgegebenen Grenzwerten aufweisen. Dieser Sicherheitsabstand ist jedoch auf den jeweiligen Betriebszustand des Reaktors angepasst, sodass eine zu konservative Abschätzung, wie sie aus der Vorgabe pauschaler Kriterien resultieren kann, vermieden wird.

In einer weiteren bevorzugten Ausführungsform werden zur Berechnung des Gesamtvolumens in Schritt (b) Dichten von Gasen, Flüssigkeiten und Gas-Flüssig-Gemischen verwendet. Diese Dichten können als Messwerte in Schritt (a) erfasst werden, auf Basis von anderen gemessenen ausgewählten Zustandsgrößen berechnet werden, und/oder als Betriebsparameter konservativ geschätzt werden.

Als besonders vorteilhaft hat sich eine Berechnungsvorschrift erwiesen, die zur Berechnung des Gesamtvolumens an ungelöstem Gas ($V_{gas,total}$) alle relevanten Teilvolumina ($V_i$) mit der jeweiligen repräsentativen Gemischdichte

($\rho_{mix,i}$), Flüssigdichte ($\rho_{liq,i}$) und Gasdichte ($\rho_{gas,i}$) sowie gegebenenfalls weitere Teilvolumina ($V_{gas,add,j}$), beispielsweise Toträume, berücksichtigt. Eine mögliche Berechnungsvorschrift ist in der folgenden Gleichung wiedergegeben:

$$V_{gas,total} = \sum_{i=1}^{n} \frac{V_i \left( \rho_{liq,i} - \rho_{mix,i} \right)}{\rho_{liq,i} - \rho_{gas,i}} + \sum_{j=1}^{n} V_{gas,add,j}$$

Methoden und Geräte zur Erfassung von Messwerten der Dichten sind aus dem Stand der Technik bekannt, beispielsweise radiometrische Dichtemessungen, Coriolis-Massemesser oder Schwinggabeln.

Bei der Berechnung von Dichten auf Basis anderer gemessener Zustandsgrößen werden für die Dichten von Gasen vorzugsweise Drücke, Temperaturen und Gaszusammensetzungen als Zustandsgrößen ausgewählt. Auf Basis von bekannten oder ermittelten Stoffdaten lassen sich aus diesen Zustandsgrößen die Gasdichten berechnen. Für die Berechnung von Dichten von Flüssigkeiten werden vorzugsweise Temperaturen und Zusammensetzungen der Flüssigkeit als Zustandsgrößen ausgewählt. Auf Basis von bekannten oder ermittelten Stoffdaten lassen sich aus diesen Zustandsgrößen die Flüssigkeitsdichten berechnen. Die Berechnung von Dichten auf Basis anderer gemessener Zustandsgrößen ist insbesondere dann von Vorteil, wenn sich Dichten nicht direkt messen lassen, beispielsweise aufgrund der apparativen Gegebenheiten.

In manchen Anwendungsfällen ist es vorteilhaft, Dichten nicht zu berechnen, sondern als Betriebsparameter konservativ abzuschätzen. In diesem Zusammenhang wird unter einer "konservativen Schätzung" eine Schätzung verstanden, die das Gesamtvolumen an ungelöstem Gas im Reaktor maximiert, sodass die Berechnungen das größtmögliche Sicherheitsrisiko oder Schadenspotenzial berücksichtigen. Beispielsweise kann eine Gasdichte konservativ geschätzt werden, wenn sich relevante Betriebsparameter wie Temperatur, Druck und Zusammensetzung über einen absehbaren Zeitraum nicht ändern. Die konservative Schätzung kann sich auch auf andere Größen beziehen, die wiederum zur Bestimmung von Dichten verwendet werden. Beispielsweise können Anteile von Inertgasen oder anderen Gasen in einem Flüssigstrom, der einem Reaktor zugeführt wird, konservativ geschätzt werden. Ein weiteres Beispiel ist die konservative Abschätzung von zu erwartenden Messfehlern, beispielsweise bei einer Füllstandsmessung in einem Behälter, in dem sich ein Gas-Flüssig-Gemisch befindet.

Je nach Anwendungsfall können die Maßnahmen zur Ermittlung von Dichten zur Berechnung des Gesamtvolumens in Schritt (b) auch kombiniert werden, sodass manche Dichten als Messwerte erfasst werden, manche Dichten auf Basis von anderen gemessenen ausgewählten Zustandsgrößen berechnet werden, und manche Dichten als Betriebsparameter konservativ geschätzt werden. Dadurch ist das erfindungsgemäße Verfahren flexibel für eine Vielzahl an Reaktorvarianten anpassbar und anwendbar.

In manchen Ausgestaltungen von Reaktoren liegt an mindestens einer Stelle im Strömungsweg des Gas-Flüssig-Gemisches ein Drucksprung vor, beispielsweise aufgrund einer Pumpe, eines Verdichters, eines Ventils oder einer Düse. Bei einer solchen Ausgestaltung hat es sich als vorteilhaft herausgestellt, dass die Dichte mindestens einer Flüssigkeit auf Basis von Messwerten von Druck und Dichte des strömenden Gas-Flüssig-Gemisches vor und nach dem Drucksprung berechnet wird. Diese Vorgehensweise ist insbesondere dann von Vorteil, wenn die Zusammensetzung der Flüssigkeit nicht hinreichend genau bekannt oder bestimmbar ist, beispielsweise wenn sich die Zusammensetzung während einer chemischen Reaktion ändert oder bei einer Messung ein ungelöster Gasanteil im Gas-Flüssig-Gemisch nicht ausgeschlossen werden kann.

In einer weiteren bevorzugten Ausführungsform des erfindungsgemäßen Verfahrens wird bei der Berechnung des Gesamtvolumens in Schritt (b) der zeitliche Verlauf des Gesamtvolumens über einen vorgegebenen Prädiktionszeitraum berücksichtigt. Bei dieser Ausführungsform wird die zeitliche Dynamik des verfahrenstechnischen Prozesses berücksichtigt. Einflussfaktoren können beispielsweise Totzeiten oder technisch bedingte Verzögerungszeiten sein, die bei der Messwerterfassung oder bei der Ansteuerung von Stellorganen wie Ventilen auftreten. So kann beispielsweise im Fall des Schließens eines Ventils in einer Leitung, durch die ein Gas-Flüssig-Gemisch in den Reaktor fließt, das Gasvolumen berücksichtigt werden, das nach dem Signal zum Schließen des Ventils bis zum vollständig geschlossenen Zustand noch in den Reaktor gelangt. Auch Kenntnisse über den zu erwartenden zeitlichen Verlauf einer chemischen Reaktion im Reaktor können in der Berechnung berücksichtigt werden, insbesondere wenn aufgrund der Reaktion weiteres Gas entsteht, das zur Erhöhung des Gesamtvolumens an ungelöstem Gas im Reaktor beiträgt. Der Prädiktionszeitraum wird vorzugsweise so gewählt, dass er eine konservative Abschätzung der Auswirkungen der Einflussfaktoren auf das Berechnungsergebnis erlaubt. Durch die Betrachtung der zeitlichen Dynamik über einen Prädiktionszeitraum lassen sich Effekte berücksichtigen, die aufgrund einer rein stationären Betrachtung zum aktuellen Zeitpunkt nicht abschätzbar sind. Diese Effekte können insbesondere dann relevant sein, wenn das Verfahren zur Überwachung eines Reaktors eingesetzt wird, um Schäden von Personen oder der Umwelt zu verhindern.

In einer weiteren bevorzugten Ausführungsform werden die in Schritt (a) erfassten Messwerte mindestens einer Zustandsgröße einer Vorverarbeitung unterzogen, bevor sie in Schritt (b) zur Berechnung verwendet werden.

Beispiele für Schritte der Vorverarbeitung sind Normierung auf einen definierten Zahlenbereich, Korrektur des Nullpunktes, Umrechnung der Signale der erfassten Messwerte auf physikalische Einheiten, Filtern der Messwerte, Glätten der Messwerte, Berücksichtigung von dynamischen Effekten und konservative Abschätzungen. Besonders bevorzugt umfasst die Vorverarbeitung eine konservative Abschätzung unter Berücksichtigung von Unsicherheiten bezüglich der Messwerterfassung, der in Schritt (b) verwendeten Berechnungsvorschriften und/oder des zeitlichen Verlaufs der Messwerte über einen vorgegebenen Prädiktionszeitraum. Eine konservative Abschätzung bedeutet auch diesbezüglich, dass das maximale Gesamtvolumen an ungelöstem Gas berechnet und somit das größtmögliche Sicherheitsrisiko oder Schadenspotenzial berücksichtigt wird. Unsicherheiten bezüglich der Messwerterfassung können beispielsweise Toleranzen für Messfehler oder Messungenauigkeiten sein. Unsicherheiten bezüglich der Berechnungsvorschriften können sich beispielsweise auf Basis unsicherer Parameter oder vereinfachender Modellannahmen ergeben. Zudem können durch die Berechnungsvorschriften Unsicherheiten aus der Messwerterfassung im Sinne einer Fehlerfortpflanzung in das berechnete Ergebnis eingehen. Unsicherheiten bezüglich des zeitlichen Verlaufs der Messwerte über einen vorgegebenen Prädiktionszeitraum können in der Messwerterfassung, in der Wahl des Prädiktionszeitraumes oder beidem begründet sein.

Ganz besonders bevorzugt umfasst die Vorverarbeitung eine konservative Abschätzung unter Berücksichtigung von Unsicherheiten aller drei Bestandteile, also bezüglich der Messwerterfassung, der in Schritt (b) verwendeten Berechnungsvorschriften und des zeitlichen Verlaufs der Messwerte über einen vorgegebenen Prädiktionszeitraum. Dadurch werden die größten Beiträge zum Sicherheitsrisiko berücksichtigt. Auch in diesem Fall kann es vorteilhaft sein, einzelne Unsicherheiten im Sinne einer Kompensation zu berücksichtigen. Dadurch kann gegebenenfalls vermieden werden, dass die Berücksichtigung der Unsicherheiten zu konservativ ausfällt und ein unrealistisch großes Gesamtvolumen an ungelöstem Gas im Reaktor berechnet wird.

Ein weiterer Gegenstand der Erfindung ist eine Vorrichtung zur Überwachung eines Reaktors, in dem eine chemische Mehrphasenreaktion abläuft, bei der ein Gemisch mit mindestens einer Flüssigphase und darin ungelösten Gasblasen vorhanden ist. Die Vorrichtung umfasst einen Reaktor zur Durchführung der chemischen Mehrphasenreaktion, Messwertaufnehmer und eine Steuerungseinheit. Die Messwertaufnehmer sind geeignet, Messwerte ausgewählter Zustandsgrößen zu erfassen, die für die Bestimmung von Gasvolumina relevant sind. Die Steuerungseinheit ist eingerichtet, auf Basis der erfassten Messwerte und eines vorgegebenen mathematischen Modells das Gesamtvolumen an ungelöstem Gas im Reaktor zu berechnen, das berechnete Gesamtvolumen an ungelöstem Gas mit einem vorgegebenen Grenzwert zu vergleichen, und Steuerungssignale zu erzeugen und an Aktoren des Reaktors auszugeben, falls der vorgegebene Grenzwert überschritten ist.

Bevorzugt sind die Komponenten der Vorrichtung echtzeitfähig in dem Sinne, dass die Dynamik der Übertragung von Messwerten bekannt und zeitlich unveränderlich ist.

Weitere Gegenstände der Erfindung sind ein Computerprogramm sowie ein Computerprogrammprodukt, die geeignet sind, ein erfindungsgemäßes Verfahren durchzuführen.

Das erfindungsgemäße Computerprogramm enthält Programmcode, der bei Ausführung des Computerprogramms auf einer geeigneten Computeranlage zur Durchführung des erfindungsgemäßen Verfahrens geeignet ist.

Das erfindungsgemäße Computerprogrammprodukt umfasst ein computerlesbares Medium und ein auf dem computerlesbaren Medium gespeicherten Computerprogramm mit Programmcodemitteln, die dazu geeignet sind, bei Ablauf des Computerprogramms auf einer geeigneten Computeranlage das erfindungsgemäße Verfahren durchzuführen.

Die erfindungsgemäßen Gegenstände sind geeignet, zuverlässig potenzielle Gefährdungen aufgrund von Gasvolumina in Reaktoren, in denen chemische Mehrphasenreaktionen ablaufen, zu erkennen und präventiv Maßnahmen zur Verhinderung von gefährlichen Zuständen zu ergreifen. Die erfindungsgemäße Vorrichtung und das erfindungsgemäße Verfahren sind einfach und kostengünstig zu installieren bzw. zu implementieren.

Die Erfindung wird im Folgenden mit Verweis auf die Zeichnungen näher erläutert. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten. Es zeigen:

Fig. 1: Schlaufenreaktor mit kopfseitiger Gaseindüsung als eine erste erfindungsgemäße Ausführungsform

Fig. 2: Schlaufenreaktor mit bodenseitiger Gaseindüsung und Wärmetauscher als eine zweite erfindungsgemäße Ausführungsform

Fig. 3: Blasensäule mit bodenseitiger Gaseindüsung und Umpumpkreis als eine dritte erfindungsgemäße Ausführungsform

Fig. 4: Rührbehälter mit seitlicher Gaseindüsung als eine vierte erfindungsgemäße Ausführungsform

Liste der verwendeten Bezugszeichen

| 1 | Reaktor |
| 10 | Druckbehälter |
| 11 | Innenrohr |
| 12 | Prallplatte |
| 13 | Düse |
| 14 | Zulauf |
| 15 | Behälterauslauf |
| 16 | Zulauf |
| 17 | Kopfabzug |
| 18 | Pumpe |
| 19 | Rücklauf |
| 20 | Messwertaufnehmer |
| 21 | Sumpfabzug |

Ausführungsbeispiel 1

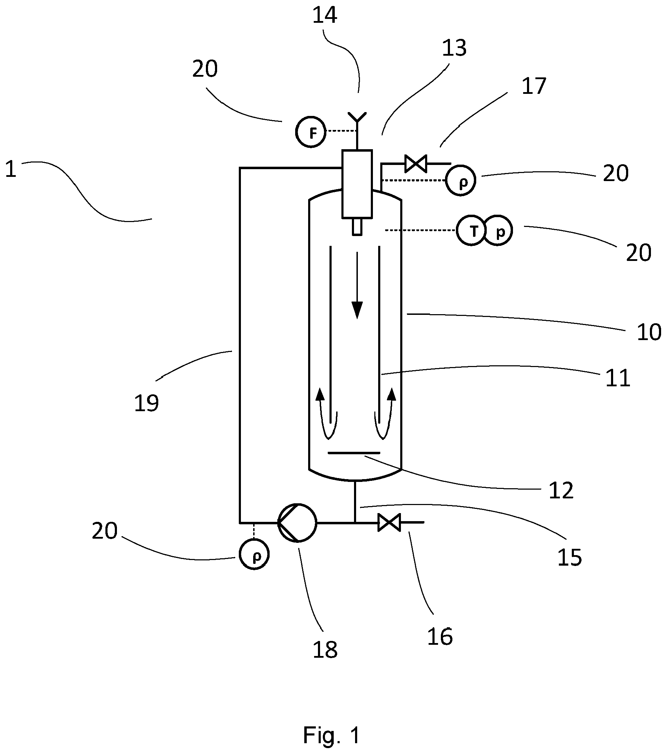

Fig. 1 zeigt schematisch einen Reaktor 1 gemäß einer ersten Ausführungsform der Erfindung. In einem zylindrischen Behälter 10 mit einer vertikalen Längsachse ist in vertikaler Richtung im mittleren Teil des Innenraumes ein Innenrohr 11 angebracht, dessen Achse mit der Zylinderachse des Behälters 10 identisch ist. Die Länge des Innenrohres 11 beträgt etwa die Hälfte der Längsausdehnung des Behälters. Zwischen dem unteren Ende des Innenrohres 11 und dem unteren Behälterboden befindet sich eine Prallplatte 12, die senkrecht zur Zylinderachse angeordnet ist und eine Querschnittsfläche aufweist, die mindestens der Querschnittsfläche des unteren Endes des Innenrohres entspricht. Der Behälter ist hinsichtlich der Materialauswahl und Materialstärke als Druckbehälter für einen vorgegebenen Innendruck ausgelegt.

In dem Druckbehälter 10 befindet sich eine flüssige Phase. Im oberen Behälterdeckel befindet sich eine Düse 13, deren Auslass sich in der Zylinderachse befindet und auf die obere Öffnung des Innenrohres 11 gerichtet ist. Über einen Zulauf 14 wird ein Einsatzstoff gasförmig der Düse 13 zugeführt und unter Druck in den Druckbehälter verdüst. Bei der Düse 13 handelt es sich um eine Treibstrahldüse, deren Treibstrahl aus einer Flüssigkeit besteht, die aus dem Reaktorsumpf abgezogen und über eine Pumpe 18 durch einen Rücklauf 19 zur Düse 13 befördert wird. Aufgrund des mit dem Treibstrahl eingebrachten Impulses wird die flüssige Phase im Innenrohr 11 nach unten gedrückt und an der Prallplatte 12 radial nach außen umgelenkt. Von dort strömt die flüssige Phase in dem Ringraum, der von der Außenseite des Innenrohres 11 und der Innenseite der Behälterwand gebildet wird, nach oben in Richtung des Behälterdeckels. Auf diese Weise ergibt sich im Behälterinneren ein Zirkulationsstrom auf Basis des Treibstrahlprinzips, der in Fig. 1 durch die gekrümmten Pfeile angedeutet ist. Über einen weiteren Zulauf 16 wird dem Reaktor ein flüssiger Einsatzstoff zugeführt. Über einen Kopfabzug 17 wird ein Gas-Flüssig-Gemisch aus dem Reaktor entnommen.

Die im Reaktor befindliche flüssige Phase und der eingedüste gasförmige Einsatzstoff werden in dem Zirkulationsstrom intensiv vermischt und reagieren in einer chemischen Mehrphasenreaktion unter Bildung eines gewünschten Zielproduktes, das unter den gegebenen Druck- und Temperaturbedingungen flüssig ist. Unter optimalen Betriebsbedingungen löst sich der gasförmige Einsatzstoff schnell ein, jedoch liegt er teilweise als ungelöste Gasblasen in der Flüssigphase vor. In den Gasblasen können je nach Druck- und Temperaturverhältnissen und dem Dampfdruck der Flüssigphase signifikante Anteile von Dampf enthalten sein. Bei einem intakten Treibstrahl herrschen im Inneren des Druckbehälters 10 stark turbulente Strömungsverhältnisse, sodass sich keine undetektierte zusammenhängende Gasphase im Druckbehälter 10 bilden kann. Durch eine Änderung der Prozessbedingungen, insbesondere von Druck und Temperatur im Reaktor, kann es jedoch dazu kommen, dass sich Gasblasen aus dem Zirkulationsstrom lösen. Die Größe der Gasblasen hängt unter anderem von den Druck- und Temperaturbedingungen im Reaktor ab. Steigt beispielsweise der Druck, werden die Gasblasen kleiner, sinkt der Druck, werden die Gasblasen größer. Große Gasblasen haben einen größeren Auftrieb im Vergleich zu mittleren oder kleinen Gasblasen und steigen im Reaktor nach oben, wo sie sich im Kopf ansammeln und eine homogene Gasphase bilden. Eine solche Gasphase ist grundsätzlich unerwünscht und kann aufgrund der explosiven Eigenschaften der vorhandenen Substanzen eine Gefahr bilden, wenn die Gasphase ein bestimmtes Volumen übersteigt. Eine zu geringe Menge an Katalysator, zu geringe Katalysatoraktivität oder eine zum Erliegen gekommene Reaktion können ebenso zu einer Akkumulation von Gasblasen führen, welche aufgrund ihres Auftriebs den Treibstrahl zum Erliegen bringen können. Auch dadurch kann sich ein unerwünschtes Gasvolumen im Reaktorkopf bilden. Die interne Zirkulation kann auch durch einen Ausfall der Hilfsenergie, beispielsweise bei einem Stromausfall, zum Erliegen kommen, was ebenso zu einer zusammenhängenden Gasphase im Reaktorkopf führen kann.

Um zu verhindern, dass der Reaktor während des Betriebs in einen potenziell gefährlichen Zustand gerät, ist eine Vorrichtung und ein Verfahren zur Überwachung des Reaktors vorgesehen. Die Vorrichtung umfasst den Reaktor 1, Messwertaufnehmer 20 sowie eine Steuerungseinheit (in Fig. 1 nicht dargestellt).

In dem in Fig. 1 dargestellten Beispiel werden über die Messwertaufnehmer 20 folgende Messwerte erfasst:

- die Flussrate (F) des gasförmigen Eduktstromes ($\dot{V}_{gas}$) im Zulauf 14,

- Druck (p) und Temperatur (T) im Kopf des Reaktors,

- die Dichte (ρ) des Gas-Flüssig-Gemisches ($\rho_{mix}$) im Kopfabzug 17, sowie

- die Dichte (ρ) der Flüssigkeit ($\rho_{liq}$) im Rücklauf 19 unmittelbar nach der Pumpe 18.

Bei den genannten Messwerten handelt es sich um ausgewählte Zustandsgrößen des Prozesses, die für die Bestimmung von Gasvolumina relevant sind. Das gesamte ungelöste Gasvolumen ($V_{gas}$) lässt sich aus dem gesamten Reaktionsvolumen ($V_{total}$) und den Dichten für die flüssige Phase ($\rho_{liq}$), der Gasphase ($\rho_{gas}$) und des Gas-Flüssig-Gemisches ($\rho_{mix}$) gemäß der folgenden Formel berechnen:

$$V_{gas} = \frac{V_{total}(\rho_{liq} - \rho_{mix})}{\rho_{liq} - \rho_{gas}}$$

Die Dichte der Gasphase ist von Druck und Temperatur abhängig: $\rho_{gas} = f(p, T)$.

Die erfassten Messwerte werden an die Steuereinheit übermittelt. Je nach Anlagenkonfiguration kann dies über drahtgebundene oder drahtlose Übermittlungssysteme erfolgen. In der Steuerungseinheit wird auf Basis der erfassten Messwerte und eines vorgegebenen mathematischen Modells das Gesamtvolumen an ungelöstem Gas im Reaktor berechnet. In dem mathematischen Modell wird auf Grundlage der Zustandsgrößen und der Reaktionszeiten prädiktiv ein Grenzwert ermittelt. Für die prädiktive Ermittlung des Gasvolumens beziehungsweise der Restlaufzeit ($t_{rem}$) bis zum Erreichen eines Grenzgasvolumens ($V_{gas,lim}$) wird die Flussrate des gasförmigen Eduktstromes herangezogen:

$$t_{rem} = \frac{V_{gas,lim} - V_{gas}}{\dot{V}_{gas}}$$

Unsicherheiten in der Dynamik, der Messwerterfassung und den Berechnungsvorschriften werden in dem mathematischen Modell durch konservative Korrektur der einzelnen Größen berücksichtigt.

$$V_{gas,max} = \frac{V_{total,max}(\rho_{liq.max} - \rho_{mix,min})}{\rho_{liq,max} - \rho_{gas,max}}$$

$$\rho_{gas,max} = f(p_{max}, T_{min})$$

$$t_{rem,min} = \frac{V_{gas,lim,min} - V_{gas,max}}{\dot{V}_{gas,max}}$$

Das berechnete Gesamtvolumen an ungelöstem Gas im Reaktor wird mit einem vorgegebenen Grenzwert verglichen. Der Grenzwert ($V_{gas,lim}$) berücksichtigt das maximale Volumen an zusammenhängender Gasphase, bei dem im Falle einer Zündung oder eines Zerfalls die Auslegungsgrenzen von Druck und Temperatur des Reaktors (Druckbehälter und alle hydraulisch gekoppelten Komponenten) sicher nicht überschritten werden. Weiterhin berücksichtig der Grenzwert eventuelle Rückströmungen, die z.B. bei Spannungsausfall zu einer Zunahme des Gasvolumens führen. Die Vorgabe des Grenzwertes kann erfolgen durch die rechnerische oder experimentelle Ermittlung des entstehenden Druckanstiegs bei der Explosion des entsprechenden Volumens sowie der rechnerischen oder experimentellen Ermittlung der Auslegungsgrenzen des Reaktorsystems.

Weiterhin ist durch die Reaktionszeit des Systems eine prädiktive Berücksichtigung notwendig, weshalb der prädiktive Grenzwert eine Reaktionszeit ($t_{reac}$) des Systems darstellt. Diese Reaktionszeit wird mit der Restlaufzeit ($t_{rem}$) bis zum Erreichen des Volumen-Grenzwertes verglichen. Die Reaktionszeit setzt sich aus den Totzeiten ($t_{dead}$) durch den Prozess, Dämpfungen, Filterung und Messverzögerungen, den Verarbeitungszeiten im Computersystem ($t_{comp}$), den Zeiten für das Einleiten der Sicherungsmaßnahmen ($t_{close}$), z.B. Schließzeiten von Ventilen, und sonstigen Einflüssen auf die Reaktionszeit zusammen ($t_{add}$).

$$t_{reac} = t_{dead} + t_{comp} + t_{close} + t_{add}$$

Falls der vorgegebene Grenzwert überschritten wird beziehungsweise der prädiktive Grenzwert unterschritten wird ($t_{rem} \leq t_{reac}$), leitet die Steuerungseinheit Sicherungsmaßnahmen ein. Dazu erzeugt die Steuerungseinheit Steuerungssignale und gibt diese an Aktoren des Reaktors aus. Im dargestellten Beispiel umfassen die Sicherungsmaßnahmen das Drosseln der Zufuhr des gasförmigen Einsatzstoffes in den Reaktor durch Schließen eines Ventils (in Fig. 1 nicht dargestellt) im Zulauf 14.

Durch den prädiktiven Anteil wird somit sichergestellt, dass sich unter keinen Umständen eine größere Gasblase als zulässig im Reaktor befindet, ein möglicher Druck- und Temperaturanstieg durch den Zerfall oder Zündung dieser Gasphase würde somit nicht die Auslegungsgrenzen des Reaktors überschreiten.

Ausführungsbeispiel 2

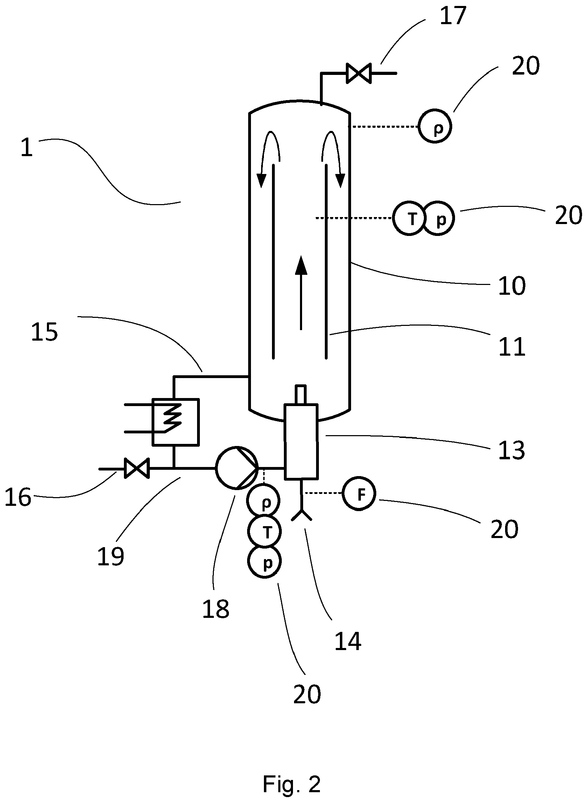

Fig. 2 zeigt schematisch einen Reaktor 1 gemäß einer zweiten Ausführungsform der Erfindung. In einem zylindrischen Behälter 10 mit einer vertikalen Längsachse ist in vertikaler Richtung im mittleren Teil des Innenraumes ein Innenrohr 11 angebracht, dessen Achse mit der Zylinderachse des Behälters 10 identisch ist. Die Länge des Innenrohres 11 beträgt etwa die Hälfte der Längsausdehnung des Behälters. Der Behälter ist hinsichtlich der Materialauswahl und Materialstärke als Druckbehälter für einen vorgegebenen Innendruck ausgelegt.

In dem Druckbehälter 10 befindet sich eine flüssige Phase. Im unteren Behälterboden befindet sich eine Düse 13, deren Auslass sich in der Zylinderachse befindet und auf die untere Öffnung des Innenrohres 11 gerichtet ist. Über einen Zulauf 14 wird ein Einsatzstoff gasförmig der Düse 13 zugeführt und unter Druck in den Druckbehälter verdüst. Bei der Düse 13 handelt es sich um eine Treibstrahldüse, deren Treibstrahl aus einer Flüssigkeit besteht, die aus dem Reaktorsumpf über einen Auslauf 15 abgezogen und über eine Pumpe 18 zur Düse 13 befördert wird. Aufgrund des mit dem Treibstrahl eingebrachten Impulses wird die flüssige Phase im Innenrohr 11 nach oben gedrückt und an dem oberen Behälterdeckel radial nach außen umgelenkt. Von dort strömt die flüssige Phase in dem Ringraum, der von der Außenseite des Innenrohres 11 und der Innenseite der Behälterwand gebildet wird, nach unten in Richtung des Behälterbodens. Auf diese Weise ergibt sich im Behälterinneren ein Zirkulationsstrom auf Basis des Treibstrahlprinzips, der in Fig. 2 durch die gekrümmten Pfeile angedeutet ist.

Die im Reaktor ablaufenden Prozesse entsprechen im Wesentlichen denen, wie sie oben zum Ausführungsbeispiel 1 beschrieben sind. Im Folgenden werden daher nur die Unterschiede zum Verfahren gemäß Ausführungsbeispiel 1 erläutert.

In dem Ausführungsbeispiel 2 gemäß Fig. 2 wird in dem Reaktor 1 eine stark exotherme Reaktion durchgeführt. Die starke Exothermie der Reaktion hat zur Folge, dass die Temperatur in der Reaktionszone im Inneren des Reaktors signifikant höher ist als die Temperatur im Rücklauf 19. Dieser Temperaturunterschied wird bei der Berechnung der Dichte berücksichtigt.

In dem in Fig. 2 dargestellten Beispiel werden über die Messwertaufnehmer 20 folgende Messwerte erfasst:

- die Flussrate (F) des gasförmigen Eduktstromes ($\dot{V}_{gas}$) im Zulauf 14,
- Druck (p) und Temperatur (T) im oberen Drittel des Reaktors ($p_1, T_1$),
- die Dichte ($\rho$) des Gas-Flüssig-Gemisches ($\rho_{mix}$) im Reaktorkopf, sowie
- die Dichte ($\rho$), der Druck (p) und die Temperatur (T) der Flüssigkeit ($\rho_{liq}, p_2, T_2$) im Rücklauf 19 unmittelbar nach der Pumpe 18.

Bei den genannten Messwerten handelt es sich um ausgewählte Zustandsgrößen des Prozesses, die für die Bestimmung von Gasvolumina relevant sind. Das gesamte ungelöste Gasvolumen ($V_{gas}$) lässt sich aus dem gesamten Reaktionsvolumen ($V_{total}$) und den Dichten für die flüssige Phase ($\rho_{liq}$), der Gasphase ($\rho_{gas}$) und des Gas-Flüssig-Gemisches ($\rho_{mix}$) gemäß der folgenden Formel berechnen:

$$V_{gas} = \frac{V_{total}(\rho_{liq} + \rho_{liq,cor}(\rho_{liq}, T_1, T_2) - \rho_{mix})}{\rho_{liq} + \rho_{liq,cor}(\rho_{liq}, T_1, T_2) - \rho_{gas}}$$

Der Korrekturterm ($\rho_{liq,cor}(\rho_{liq}, T_1, T_2)$) berücksichtigt den oben erwähnten Temperaturunterschied in den flüssigen Phasen. Die Dichte der Gasphase ist von Druck und Temperatur abhängig:

$$\rho_{gas} = f(p_1, T_1, p_2, T_2)$$

Der prädiktive Anteil, die konservative Korrektur der Zustandsgrößen sowie die Reaktionen auf Grenzwertverletzung erfolgen analog zu Ausführungsbeispiel 1.

Die Grenzwertermittlung erfolgt hier jedoch dynamisch auf Grundlage der Temperatur und des Drucks im Druckbehälter und nicht konservativ über den gesamten Druck- und Temperaturbereich während der Produktion:

$$V_{gas,lim} = f(p_1, T_1)$$

Ausführungsbeispiel 3

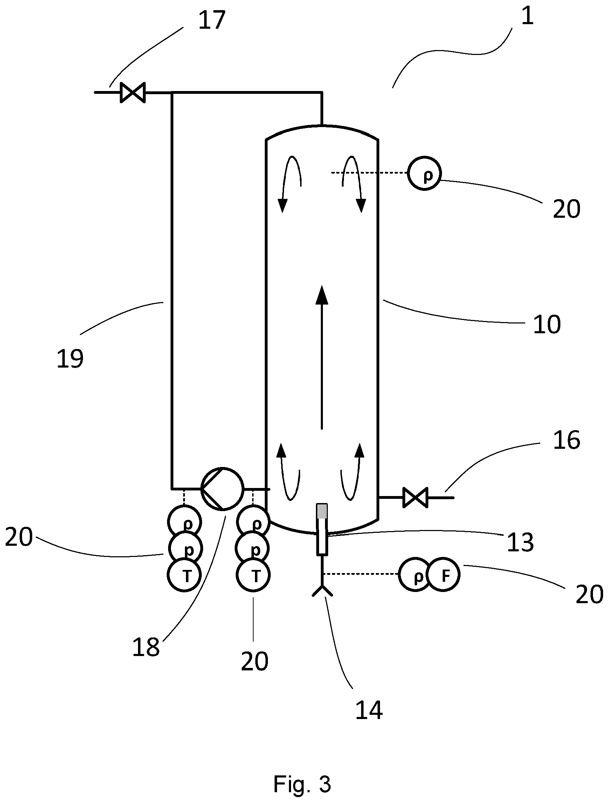

Fig. 3 zeigt schematisch einen Reaktor 1 gemäß einer dritten Ausführungsform der Erfindung. Der Reaktor umfasst einen zylindrischen Behälter 10 mit einer vertikalen Längsachse. Der Behälter ist hinsichtlich der Materialauswahl und Materialstärke als Druckbehälter für einen vorgegebenen Innendruck ausgelegt.

Im unteren Behälterboden befindet sich eine Düse 13, deren Auslass sich in der Zylinderachse befindet. Über einen Zulauf 14 wird ein Einsatzstoff gasförmig der Düse 13 zugeführt und unter Druck in den Druckbehälter verdüst. In dem Reaktor entsteht aufgrund des Impulses und des Auftriebs der Gasblasen eine Blasensäule, wohingegen die Flüssigkeitsströmung von oben nach unten erfolgt. Dazu wird Flüssigkeit aus dem unteren Teil des Behälters abgezogen und über eine Pumpe 18 in einem Rücklauf 19 dem Reaktorkopf zugeführt. Auf diese Weise ergibt sich im Behälterinneren ein Zirkulationsstrom, der in Fig. 3 durch die gekrümmten Pfeile angedeutet ist. Über einen weiteren Zulauf 16 wird dem Reaktor ein flüssiger Einsatzstoff zugeführt. Über einen Kopfabzug 17 wird ein Gas-Flüssig-Gemisch aus dem Reaktor entnommen.

Die im Reaktor befindliche flüssige Phase und der eingedüste gasförmige Einsatzstoff werden in dem Zirkulationsstrom intensiv vermischt und reagieren in einer chemischen Mehrphasenreaktion unter Bildung eines gewünschten Zielproduktes, das unter den gegebenen Druck- und Temperaturbedingungen flüssig ist. Unter optimalen Betriebsbedingungen löst sich der gasförmige Einsatzstoff schnell ein, jedoch liegt er teilweise als ungelöste Gasblasen in der Flüssigphase vor. In den Gasblasen können je nach Druck- und Temperaturverhältnissen und dem Dampfdruck der Flüssigphase signifikante Anteile von Dampf enthalten sein. Bei einem intakten Treibstrahl herrschen im inneren des Druckbehälters 10 stark turbulente Strömungsverhältnisse, sodass sich keine undetektierte zusammenhängende Gasphase im Druckbehälter 10 bilden kann. Die Größe der Gasblasen hängt unter anderem von den Druck- und Temperaturbedingungen im Reaktor ab. Steigt beispielsweise der Druck, werden die Gasblasen kleiner, sinkt der Druck, werden die Gasblasen größer. Große Gasblasen haben einen größeren Auftrieb im Vergleich zu mittleren oder kleinen Gasblasen und steigen im Reaktor nach oben, wo sie sich im Kopf ansammeln und eine homogene Gasphase bilden.

Eine solche Gasphase ist grundsätzlich unerwünscht und kann aufgrund der explosiven Eigenschaften der vorhandenen Substanzen eine Gefahr bilden, wenn die Gasphase ein bestimmtes Volumen übersteigt. Eine zu geringe Menge an Katalysator, zu geringe Katalysatoraktivität oder eine zum Erliegen gekommene Reaktion können ebenso zu einer Akkumulation von Gasblasen führen, welche durch ihren Auftrieb ein unerwünschten Gasvolumen am Reaktorkopf bilden können. Die interne Zirkulation kann auch durch einen Ausfall der Hilfsenergie, beispielsweise bei einem Stromausfall, zum Erliegen kommen, was ebenso zu einer zusammenhängenden Gasphase im Reaktorkopf führen kann. Die Dichte der Flüssigkeit kann an keinem Ort des Reaktors direkt gemessen werden, da auch in der Rückführung ein signifikanter Anteil an Blasen nicht ausgeschlossen werden kann.

Um zu verhindern, dass der Reaktor während des Betriebs in einen potenziell gefährlichen Zustand gerät, ist eine Vorrichtung und ein Verfahren zur Überwachung des Reaktors vorgesehen. Die Vorrichtung umfasst den Reaktor 1, Messwertaufnehmer 20 sowie eine Steuerungseinheit (in Fig. 3 nicht dargestellt).

In dem in Fig. 3 dargestellten Beispiel werden über die Messwertaufnehmer 20 folgende Messwerte erfasst:

- die Flussrate (F) des gasförmigen Eduktstromes ($\dot{V}_{gas}$) im Zulauf 14,

- die Dichte ($\rho$) des gasförmigen Eduktstromes ($\rho_{gas}$)

- die Dichte ($\rho$) des Gas-Flüssig-Gemisches ($\rho_{mix}$) im Reaktorkopf, sowie

- die Dichte ($\rho$), der Druck (p) und die Temperatur (T) vor ($\rho_2, p_2, T_2$) und nach ($\rho_5, p_5, T_5$) der Pumpe 18 im Rücklauf 19.

Bei den genannten Messwerten handelt es sich um ausgewählte Zustandsgrößen des Prozesses, die für die Bestimmung von Gasvolumina relevant sind. Das gesamte ungelöste Gasvolumen ($V_{gas}$) lässt sich aus dem gesamten

Reaktionsvolumen ($V_{total}$) und den Dichten für die flüssige Phase ($\rho_{liq}$), der Gasphase ($\rho_{gas}$) und des Gas-Flüssig-Gemisches ($\rho_{mix}$) gemäß der folgenden Formel berechnen:

$$V_{gas} = \frac{V_{total}(\rho_{liq} - \rho_{mix})}{\rho_{liq} - \rho_{gas}}$$

Die Berechnung der Flüssigdichte im Reaktor 1 beruht auf den Dichtemessungen ($\rho_2$) direkt vor und der Dichtemessung ($\rho_5$) direkt nach der Pumpe 18. Angenommen wird, dass eventuell enthaltene Gasblasen komprimiert werden, das Gas sich aber nicht einlöst. Mit Kenntnis des Drucks unmittelbar an den Dichtemessstellen vor und nach der Pumpe 18 ($\rho_2$ und $\rho_5$) kann die Gemischdichte bis zum Druck "unendlich" fortgeschrieben werden und dadurch die Flüssigdichte berechnet werden ($\rho_{liq}$). Weiterhin sind zu den Druckmesswerten ($p_2$ und $p_5$) an den Dichtemessstellen die entsprechenden Temperaturen ($T_2$ und $T_5$) zu kompensieren:

$$\rho_{liq} = f(\rho_2, p_2, T_2, \rho_5, p_5, T_5)$$

Da während der Reaktion auch geringe Menge an einem gasförmigen Nebenprodukt (in Abhängigkeit der Temperatur) entstehen kann, wird zur Berechnung des prädiktiven Anteils ein weiterer Term berücksichtigt:

$$t_{rem,min} = \frac{V_{gas,lim,min} - V_{gas,max}}{\dot{V}_{gas,max} + \dot{V}_{gas_n,max}(T_{1,max})}$$

Die konservative Korrektur der Zustandsgrößen erfolgt analog zu Ausführungsbeispiel 1. Auch die Grenzwertermittlung erfolgt analog zu Ausführungsbeispiel 1, jedoch kommt in diesem Beispiel ein zweiter Grenzwert zum Einsatz, der 50% höher liegt als die Reaktionszeit ($t_{reac}$):

$$t_{pre} = t_{reac} * 1{,}5$$

Wird der erste prädiktive Grenzwert unterschritten ($t_{rem} \leq t_{pre}$), leitet die Steuerungseinheit Sicherungsmaßnahmen ein. Dazu erzeugt die Steuerungseinheit Steuerungssignale und gibt diese an Aktoren des Reaktors aus. Im dargestellten Beispiel umfassen die Sicherungsmaßnahmen

- Zuführungen einer zusätzlichen Menge an Katalysator über den Zulauf 16,
- Erhöhung des Umlaufes über Pumpe 18, indem die Drehzahl des zugehörigen Motors um 25% erhöht wird (im Vergleich zum Normalbetrieb).

Falls der vorgegebene Grenzwert für das maximale Gasvolumen ($V_{gas,lim,min}$) überschritten wird, beziehungsweise auch der prädiktive Grenzwert für die Reaktionszeit unterschritten wird ($t_{rem} \leq t_{reac}$), leitet die Steuerungseinheit weitere Sicherungsmaßnahmen ein. Dazu erzeugt die Steuerungseinheit Steuerungssignale und gibt diese an Aktoren des Reaktors aus. Im dargestellten Beispiel umfassen die Sicherungsmaßnahmen

- das Drosseln der Zufuhr des gasförmigen Eduktes in den Reaktor durch Schließen eines Ventils (in Fig. 1 nicht dargestellt) im Zulauf 14,
- Notabschaltung des zugehörigen Kompressors (in Fig. 1 nicht dargestellt)

Durch den prädiktiven Anteil wird somit sichergestellt, dass sich unter keinen Umständen eine größere Gasblase als zulässig im Reaktor befindet, ein möglicher Druck- und Temperaturanstieg durch den Zerfall oder Zündung dieser Gasphase würde somit nicht die Auslegungsgrenzen des Reaktors überschreiten.

Ausführungsbeispiel 4

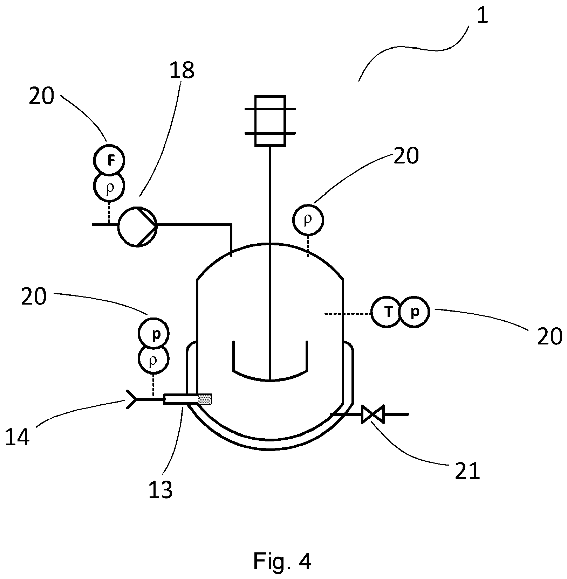

Fig. 4 zeigt schematisch einen Reaktor 1 gemäß einer vierten Ausführungsform der Erfindung. Der Reaktor 1 umfasst einen zylindrischen Rührbehälter mit einer vertikalen Längsachse. Die untere Hälfte des Behälters ist von außen mit einem Doppelmantel versehen, durch den ein Wärmeträgerfluid geleitet werden kann. In der Zylinderachse ist ein Rührer angebracht, der als Ankerrührer ausgebildet ist. Der Rührer wird von einem Motor angetrieben, der sich außerhalb des Rührbehälters befindet. Der Behälter ist hinsichtlich der Materialauswahl und Materialstärke als Druckbehälter für einen vorgegebenen Innendruck ausgelegt.

In dem Druckbehälter befindet sich eine flüssige Phase. Im unteren Drittel des Behälters befindet sich eine seitliche Düse 13. Über einen Zulauf 14 wird ein Einsatzstoff gasförmig der Düse 13 zugeführt und unter Druck in den Druckbehälter verdüst. Durch die Drehbewegungen des Rührers ergibt sich im Behälterinneren ein Zirkulationsstrom. Am Reaktorkopf wird über eine Pumpe 18 ein flüssiger Einsatzstoff zugeführt. Über einen Sumpfabzug 21 wird ein flüssiges Produkt oder ein Produkt-Edukt-Gemisch abgezogen.

Die im Reaktor befindliche flüssige Phase und der eingedüste gasförmige Einsatzstoff werden in dem Zirkulationsstrom intensiv vermischt und reagieren in einer chemischen Mehrphasenreaktion unter Bildung eines gewünschten Zielproduktes, das unter den gegebenen Druck- und Temperaturbedingungen flüssig ist. Unter optimalen Betriebsbedingungen löst sich der gasförmige Einsatzstoff schnell ein, jedoch liegt er teilweise als ungelöste Gasblasen in der Flüssigphase vor. In den Gasblasen können je nach Druck- und Temperaturverhältnissen und dem Dampfdruck der Flüssigphase signifikante Anteile von Dampf enthalten sein. Bei einem intakten Treibstrahl herrschen im Inneren des Druckbehälters stark turbulente Strömungsverhältnisse, sodass sich keine undetektierte zusammenhängende Gasphase im Druckbehälter bilden kann. Durch eine Änderung der Prozessbedingungen, insbesondere von Druck und Temperatur im Reaktor, kann es jedoch dazu kommen, dass sich Gasblasen aus dem Zirkulationsstrom lösen. Die Größe der Gasblasen hängt unter anderem von den Druck- und Temperaturbedingungen im Reaktor ab. Steigt beispielsweise der Druck, werden die Gasblasen kleiner, sinkt der Druck, werden die Gasblasen größer. Große Gasblasen haben einen größeren Auftrieb im Vergleich zu mittleren oder kleinen Gasblasen und steigen im Reaktor nach oben, wo sie sich im Kopf ansammeln und eine homogene Gasphase bilden. Eine solche Gasphase ist grundsätzlich unerwünscht und kann aufgrund der explosiven Eigenschaften der vorhandenen Substanzen eine Gefahr bilden, wenn die Gasphase ein bestimmtes Volumen übersteigt. Eine zu geringe Menge an Katalysator, zu geringe Katalysatoraktivität oder eine zum Erliegen gekommene Reaktion können ebenso zu einer Akkumulation von Gasblasen führen, welche durch ihren Auftrieb ein unerwünschten Gasvolumen am Reaktorkopf bilden können. Die interne Zirkulation kann auch durch einen Ausfall der Hilfsenergie, beispielsweise bei einem Stromausfall, zum Erliegen kommen, was ebenso zu einer zusammenhängenden Gasphase im Reaktorkopf führen kann.

Um zu verhindern, dass der Reaktor während des Betriebs in einen potenziell gefährlichen Zustand gerät, ist eine Vorrichtung und ein Verfahren zur Überwachung des Reaktors vorgesehen. Die Vorrichtung umfasst den Reaktor 1, Messwertaufnehmer 20 sowie eine Steuerungseinheit (in Fig. 4 nicht dargestellt).

In dem in Fig. 4 dargestellten Beispiel werden über die Messwertaufnehmer 20 folgende Messwerte erfasst:

- die Flussrate (F) und die Dichte (p) des flüssigen Eduktstromes ($\dot{m}_{liq}$) über Pumpe 18,

- Druck (p) und Temperatur (T) im Reaktor ($p_1, T_1$),

- die Dichte ($\rho$) des Gas-Flüssig-Gemisches ($\rho_{mix}$) im Reaktorkopf, sowie

- die Dichte ($\rho$) und Druck (p) des gasförmigen Eduktstroms 14 ($\rho_{gas}, p_4$).

Bei den genannten Messwerten handelt es sich um ausgewählte Zustandsgrößen des Prozesses, die für die Bestimmung von Gasvolumina relevant sind. Das gesamte ungelöste Gasvolumen ($V_{gas}$) lässt sich aus dem gesamten Reaktionsvolumen ($V_{total}$) und den Dichten für die flüssige Phase ($\rho_{liq}$), der Gasphase ($\rho_{gas}$) und des Gas-Flüssig-Gemisches ($\rho_{mix}$) gemäß der folgenden Formel berechnen:

$$V_{gas} = \frac{V_{total}(\rho_{liq} + \rho_{liq,cor}(\rho_{liq}, \dot{m}_{liq}, T_1) - \rho_{mix})}{\rho_{liq} + \rho_{liq,cor}(\rho_{liq}, \dot{m}_{liq}, T_1) - \rho_{gas} - \rho_{gas,cor}(\rho_{gas}, p_4, T_1, p_1)}$$

Der prädiktive Anteil, die konservative Korrektur der Zustandsgrößen sowie die Grenzwertermittlung und Reaktionen darauf erfolgen analog zu Ausführungsbeispiel 1.

**Patentansprüche**

1. Verfahren zur Überwachung eines Reaktors, in dem eine chemische Mehrphasenreaktion abläuft, bei der ein Gemisch mit mindestens einer Flüssigphase und darin ungelösten Gasblasen vorhanden ist, umfassend die Schritte

(a) Erfassung von Messwerten ausgewählter Zustandsgrößen, die für die Bestimmung von Gasvolumina relevant sind,

(b) Berechnung des Gesamtvolumens an ungelöstem Gas im Reaktor auf Basis der erfassten Messwerte,

(c) Vergleich des berechneten Gesamtvolumens an ungelöstem Gas mit einem vorgegebenen Grenzwert, und

(d) Einleiten von Sicherungsmaßnahmen, falls der vorgegebene Grenzwert überschritten wird.

2. Verfahren nach Anspruch 1, wobei bei der Berechnung des Gesamtvolumens in Schritt (b) Unsicherheiten bezüglich der Messwerterfassung und der Berechnungsvorschriften in einer Weise berücksichtigt werden, dass das maximale Gesamtvolumen an ungelöstem Gas berechnet wird.

3. Verfahren nach Anspruch 1 oder 2, wobei zur Berechnung des Gesamtvolumens in Schritt (b) Dichten von Gasen, Flüssigkeiten und Gas-Flüssig-Gemischen verwendet werden, und diese Dichten als Messwerte in Schritt (a) erfasst werden, auf Basis von anderen gemessenen ausgewählten Zustandsgrößen berechnet werden, und/oder als Betriebsparameter konservativ geschätzt werden.

4. Verfahren nach Anspruch 3, bei dem an mindestens einer Stelle im Strömungsweg des Gas-Flüssig-Gemisches ein Drucksprung vorliegt, und die Dichte mindestens einer Flüssigkeit auf Basis von Messwerten von Druck und Dichte des strömenden Gas-Flüssig-Gemisches vor und nach dem Drucksprung berechnet wird.

5. Verfahren nach einem der Ansprüche 1 bis 4, wobei bei der Berechnung des Gesamtvolumens in Schritt (b) der zeitliche Verlauf des Gesamtvolumens über einen vorgegebenen Prädiktionszeitraum berücksichtigt wird.

6. Verfahren nach einem der Ansprüche 1 bis 5, wobei die in Schritt (a) erfassten Messwerte mindestens einer Zustandsgröße einer Vorverarbeitung unterzogen werden, bevor sie in Schritt (b) zur Berechnung verwendet werden, und die Vorverarbeitung eine konservative Abschätzung unter Berücksichtigung von Unsicherheiten bezüglich der Messwerterfassung, der in Schritt (b) verwendeten Berechnungsvorschriften und/oder des zeitlichen Verlaufs der Messwerte über einen vorgegebenen Prädiktionszeitraum umfasst.

7. Verfahren nach einem der Ansprüche 1 bis 6, wobei die Sicherungsmaßnahmen in Schritt (d) eine oder mehrere der folgenden Maßnahmen umfassen:

- Drosseln der Zufuhr von Gas in den Reaktor,
- Ausschleusung von Gas aus dem Reaktor,
- Veränderung der Reaktionsbedingungen, sodass weniger Gas entsteht oder mehr Gas abreagiert,
- Erhöhung der Lösungsfähigkeit des Gases in der Flüssigphase.

8. Verfahren nach einem der Ansprüche 1 bis 7, wobei die chemische Mehrphasenreaktion eine Vinylierung, Ethinylierung, Hydrocarboxylierung, Cyclisierung, Acetylierung, Alkoxylierung, Partialoxidation, Hydroformylierung oder Phosgenierung ist.

9. Vorrichtung zur Überwachung eines Reaktors, in dem eine chemische Mehrphasenreaktion abläuft, bei der ein Gemisch mit mindestens einer Flüssigphase und darin ungelösten Gasblasen vorhanden ist, umfassend einen Reaktor (1) zur Durchführung der chemischen Mehrphasenreaktion, Messwertaufnehmer (20), die geeignet sind, Messwerte ausgewählter Zustandsgrößen zu erfassen, die für die Bestimmung von Gasvolumina relevant sind, und eine Steuerungseinheit, die eingerichtet ist, auf Basis der erfassten Messwerte und eines vorgegebenen mathematischen Modells das Gesamtvolumen an ungelöstem Gas im Reaktor zu berechnen, das berechnete Gesamtvolumen an ungelöstem Gas mit einem vorgegebenen Grenzwert zu vergleichen, und Steuerungssignale zu erzeugen und an Aktoren des Reaktors auszugeben, falls der vorgegebene Grenzwert überschritten ist.

10. Computerprogramm mit Programmcode, der bei Ausführung des Computerprogramms auf einer geeigneten Computeranlage zur Durchführung eines Verfahrens nach einem der Ansprüche 1 bis 8 geeignet ist.

11. Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einer geeigneten Computeranlage ein Verfahren nach einem der Ansprüche 1 bis 8 durchzuführen.

Fig. 1

Fig. 2

Fig. 3

Fig. 4

**Europäisches Patentamt**

**European Patent Office**

**Office européen des brevets**

## EUROPÄISCHER RECHERCHENBERICHT

**Nummer der Anmeldung**

EP 20 17 8862

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 241 389 B2 (AIR LIQUIDE [FR]) 10. Juli 2007 (2007-07-10) * Spalte 10 - Spalte 11 * ----- | 1-11 | INV. B01J19/00 |
| A | EP 0 452 748 A1 (SHINETSU CHEMICAL CO [JP]) 23. Oktober 1991 (1991-10-23) * Abbildung 1 * ----- | 1-11 | |
| A | WO 2009/092683 A2 (BASF SE [DE]; OEHLENSCHLAEGER STEFFEN [DE] ET AL.) 30. Juli 2009 (2009-07-30) * Abbildung 1 * ----- | 1-11 | |

**RECHERCHIERTE SACHGEBIETE (IPC)**

B01J

Der vorliegende Recherchenbericht wurde für alle Patentansprüche erstellt

| Recherchenort | Abschlußdatum der Recherche | Prüfer |
|---|---|---|
| München | 3. September 2020 | Pasanisi, Andrea |

**ANHANG ZUM EUROPÄISCHEN RECHERCHENBERICHT
ÜBER DIE EUROPÄISCHE PATENTANMELDUNG NR.**

EP 20 17 8862

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2020

| Im Recherchenbericht angeführtes Patentdokument | Datum der Veröffentlichung | Mitglied(er) der Patentfamilie | Datum der Veröffentlichung |
|---|---|---|---|
| US 7241389 B2 | 10-07-2007 | AT 556768 T<br>AU 2810602 A<br>CA 2436927 A1<br>EP 1345684 A1<br>ES 2383674 T3<br>FR 2818162 A1<br>PT 1345684 E<br>US 2004055968 A1<br>WO 0249753 A1 | 15-05-2012<br>01-07-2002<br>27-06-2002<br>24-09-2003<br>25-06-2012<br>21-06-2002<br>15-06-2012<br>25-03-2004<br>27-06-2002 |
| EP 0452748 A1 | 23-10-1991 | CA 2039766 A1<br>DE 69101151 T2<br>EP 0452748 A1<br>JP H03287602 A<br>PT 97275 A | 06-10-1991<br>09-06-1994<br>23-10-1991<br>18-12-1991<br>30-06-1993 |
| WO 2009092683 A2 | 30-07-2009 | DE 112009000169 A5<br>WO 2009092683 A2 | 24-02-2011<br>30-07-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10225383 A1

- DE 19905712 A1